# FASCICULE DE BREVET EUROPEEN

(11) **EP 3 224 669 B1**
(45) Date de publication et mention de la délivrance du brevet: **16.11.2022**
(21) Numéro de dépôt: 15808764.3
(22) Date de dépôt: 27.11.2015
(51) Int. Cl.: G02F 1/1335, G02F 1/13357, G02B 27/01, G02B 19/00

(54) **DISPOSITIF DE RÉTROÉCLAIRAGE NOTAMMENT POUR AFFICHEUR TÊTE HAUTE ET AFFICHEUR TÊTE HAUTE POUR VÉHICULE AUTOMOBILE**
RÜCKBELEUCHTUNGSVORRICHTUNG, INSBESONDERE FÜR EINE HEADUP-ANZEIGE, UND HEADUP-ANZEIGE FÜR KRAFTFAHRZEUG
BACKLIGHTING DEVICE, PARTICULARLY FOR HEAD-UP DISPLAY, AND HEAD-UP DISPLAY FOR MOTOR VEHICLE

(30) Priorité: 28.11.2014 FR 1402716
(43) Date de publication de la demande: 04.10.2017
(73) Titulaire: Valeo Comfort and Driving Assistance, 94046 Créteil Cedex (FR)
(72) Inventeur: PIERRE, Lenaic, 94046 Créteil Cedex (FR)
(74) Mandataire: Delplanque, Arnaud
(86) Numéro de dépôt international: PCT/FR2015/053253
(87) Numéro de publication internationale: WO 2016/083763

(56) Documents cités:
- EP-A1- 2 690 484
- FR-A1- 2 999 731
- US-A- 5 791 770

## Description

### Domaine technique de l'invention

L'invention concerne un dispositif de rétro-éclairage notamment pour afficheurs tête haute pour véhicule automobile.

### Arrière-plan technologique

L'invention trouvera ses applications, par exemple, dans les véhicules automobiles pour informer les utilisateurs du véhicule, en particulier son conducteur.

Il est connu d'équiper un véhicule automobile avec un visionneur tête haute, également connu sous le nom afficheur tête haute ou HUD (pour « head-up display» en anglais). Un tel afficheur est placé dans le champ de vision du conducteur automobile et affiche une information relative à l'état du véhicule, du trafic ou autre. EP 2 690 484 A1 et US 5 791 770 A divulguent de tels afficheurs tête haute.

Ce type d'afficheur tête haute pour véhicule automobile nécessite l'obtention d'une image avec une luminosité suffisante pour que l'utilisateur, et notamment le conducteur du véhicule, puisse suffisamment voir l'image, et ce en toute situation, jour et nuit et selon les conditions météorologiques (ensoleillé ou nuageux).

Parmi les technologies possibles pour former une telle image grâce à l'afficheur tête haute, la plus utilisée dans l'art antérieur est la technologie d'écran à cristaux liquides, notamment d'écran cristaux liquides à transistors en couches minces, dits TFT-LCD (pour Thin-Film Transistor Liquid Crystal Display en anglais). Ces écrans TFT-LCD nécessitent, pour l'affichage d'une image, un rétro-éclairage généralement effectué par une pluralité de diodes électroluminescentes (DEL ou LED pour Light-Emitting Diode en anglais). En pratique, cet écran TFT-LCD et le rétro-éclairage sont compris dans un ensemble appelé dispositif de génération d'image aussi appelé « imager ».

Néanmoins, du fait de leur fonctionnement basé sur la lumière polarisée, ces écrans TFT-LCD ont pour inconvénient de réduire de façon importante la puissance lumineuse provenant du rétro-éclairage : avec l'utilisation d'un écran TFT-LCD classique, on estime que le taux de transmission de l'écran est d'environ 5% de la puissance lumineuse du rétro-éclairage. Cette faible valeur est notamment due au premier polariseur présent dans l'écran qui ne laisse passer que la lumière correspondant à une certaine polarisation, alors que les LEDs produisent de la lumière avec plusieurs polarisations : toutes les polarisations ne correspondant pas à celle que laisse passer le polariseur sont alors perdues.

Dès lors, pour l'affichage d'une image par l'afficheur avec une puissance lumineuse suffisante, il faut utiliser un rétro-éclairage d'une puissance lumineuse importante puisque l'image affichée aura une puissance lumineuse de l'ordre de 5% de cette puissance de rétro-éclairage. Cela engendre des consommations importantes d'énergie, ainsi que des pertes importantes sous forme de chaleur, qui de plus peuvent dégrader les composants et nécessitent donc l'utilisation de dissipateurs de chaleur volumineux.

### Objectifs de l'invention

L'invention vise à pallier au moins certains des inconvénients ci-dessus.

En particulier, l'invention vise à fournir un dispositif de rétro-éclairage avec un bon rendement optique tout en offrant un encombrement réduit.

### Exposé de l'invention

A cet effet, l'invention a pour objet un dispositif de rétro-éclairage tel que présenté dans la revendication indépendante 1. D'autres aspects de l'invention sont présentés dans les revendications dépendantes.

Des ailettes réalisées en tôle pliée, aussi appelé feuillard plié , présente une meilleure efficacité thermique que des ailettes issues de moulage. Du fait que la chaleur produite par les diodes est efficacement évacuée par le dissipateur thermique en deux parties, on peut placer l'optique de mise en forme plus près des diodes, notamment à environ 0,5mm. Ainsi, on peut réduire la hauteur et la taille du dispositif de rétro-éclairage, ce qui se traduit en un plus faible encombrement d'un afficheur tête haute (HUD) dans son ensemble. Ce dernier point est très important au niveau de la planche de bord où le afficheur sera intégré et où chaque millimètre de gagné en encombrement est très important. En outre, le rendement optique du dispositif peut être augmenté par le fait de placer l'optique de mise en forme plus près, car on réduit les pertes latérales du cône de lumière.. Grâce à l'invention, il est ainsi possible de réaliser un dispositif d'affichage tête haute destiné à être agencé dans un encombrement réduit sans dégrader les performances optiques

L'invention concerne également un dispositif de génération d'image, notamment pour afficheur tête haute, comportant un écran à cristaux liquide et un dispositif de rétro-éclairage de cet écran à cristaux liquide tel que défini ci-dessus.

L'invention concerne aussi un afficheur tête haute comprenant un dispositif de génération d'image tel que défini ci-dessus.

L'afficheur tête haute comporte par exemple au moins un miroir de renvoi. Selon un aspect, le dispositif de génération d'image est maintenu dans un boîtier d'afficheur tête haute et le dissipateur thermique fait saillie à l'extérieur du boîtier d'afficheur tête haute.

Ceci améliore davantage l'évacuation de la chaleur produite par les diodes électroluminescentes.

D'autres avantages et caractéristiques apparaîtront à la lecture de la description de l'invention, ainsi que des dessins annexés sur lesquels :
- la figure 1 est une vue schématique en perspective et en coupe transversale d'un mode de réalisation d'un dispositif n'étant pas couvert par l'invention,
- la figure 2 est une vue schématique en coupe transversale d'un détail du dispositif n'étant pas couvert par l'invention,
- la figure 3 est une vue schématique de côté d'un exemple de réalisation du dissipateur thermique,
- la figure 4 est une vue schématique en perspective de la face inférieure d'une plaque de base d'un dissipateur thermique,
- la figure 5 est une vue en perspective d'un mode de réalisation d'un dispositif selon l'invention,
- la figure 6 est une vue schématique d'un dispositif de génération d'image et d'un afficheur tête haute selon l'invention.

Sur ces figures, les éléments identiques portent les mêmes numéros de référence.

On va maintenant décrire un exemple d'un mode de réalisation en référence aux figures.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

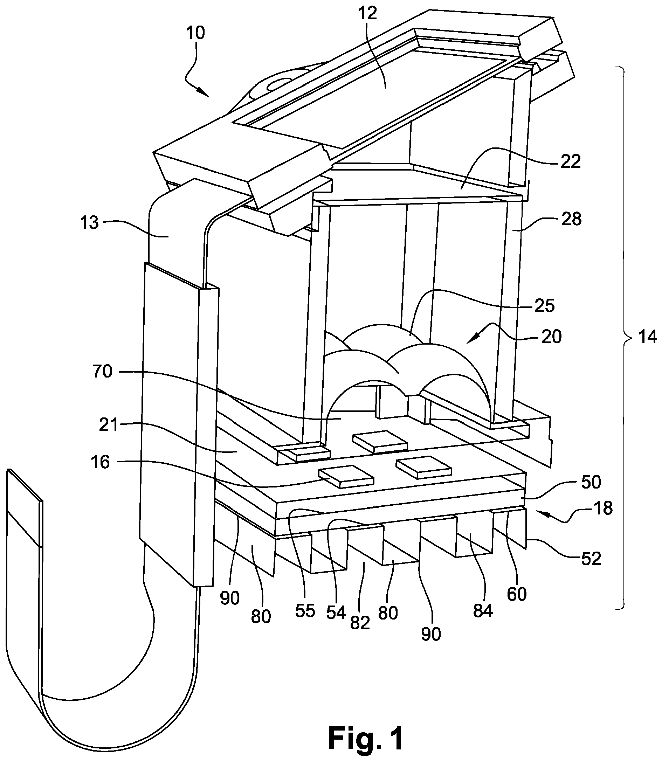

La figure 1 représente une vue schématique d'une coupe d'un dispositif 10 de génération d'image selon un mode de réalisation n'étnat pas couvert par l'invention.

Le dispositif 10 de génération d'image comprend un écran à cristaux liquides, ici un écran 12 à cristaux liquides (écran LCD) par exemple à transistors en couches minces, et un dispositif 14 de rétro-éclairage. L'écran 12 à cristaux liquides peut être à matrice active ou passive. L'écran 12 à cristaux liquides à transistors en couches minces est communément appelé écran TFT-LCD (pour Thin-Film Transistor Liquid Crystal Display en anglais), et permet la formation de l'image par le dispositif 10 de génération d'image. L'écran 12 est par exemple relié par une nappe de conducteurs ou un circuit flexible 13 à une électronique de commande.

Le dispositif 14 de rétro-éclairage a pour fonction d'apporter à l'écran 12 la lumière nécessaire à la formation de l'image. Pour ce faire, le dispositif 14 de rétro-éclairage comprend :
- une pluralité de diodes électroluminescentes 16 (aussi appelées DELs ou LEDs pour « Light Emitting Diodes » en anglais, et utilisé dans la suite de la description) émettant des faisceaux lumineux,
- une optique 20 de mise en forme des faisceaux lumineux,
- un diffuseur 22 de lumière recevant les faisceaux lumineux mis en forme.

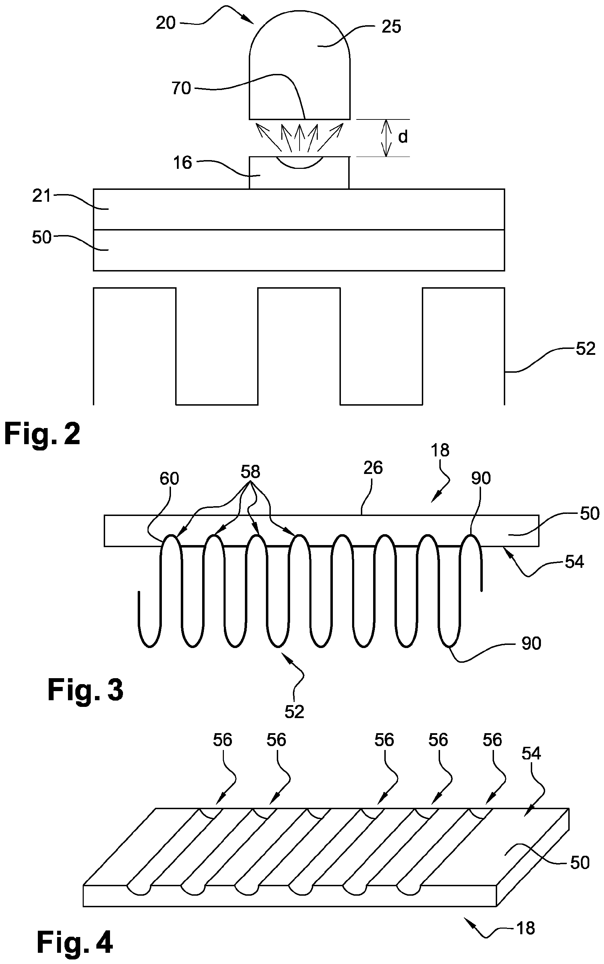

Le dispositif 14 comporte en outre un dissipateur thermique 18 comprenant au moins deux parties à savoir d'une part, une plaque de base 50 plane sur sa face inférieure 54 et un feuillard 52 plié en forme « créneaux», des parties plates 60 formant des zones de contact étant fixées directement contre la face inférieure 54 plaque de base 50, par exemple par collage ou soudure. Pour assurer un bon échange thermique on interpose une pâte thermique à bon coefficient thermique entre la plaque de base 50 et le feuillard 52. Selon au autre exemple non limitatif de réalisation de l'invention, le feuillard peut aussi être maintenu par sertissage sur la plaque de base 50. Selon d'autres modes de réalisations, les zones de contact 60 ne sont pas nécessairement plates mais peuvent être arrondies comme par exemple illustré à la figure 3.

Le feuillard 52 à plis multiples forme des ailettes de refroidissement 80. La forme en créneaux du feuillard permet au fluide de refroidissement de se déplacer par un mouvement de convection naturelle le long des ailettes 80 formant des canaux ouvert sur l'extérieur 82 ou fermés 84, ces canaux fermés étant bien entendu ouverts aux deux extrémités.

A titre d'exemple non limitatif, pour une bonne conduction thermique et/ou échange thermique avec le fluide de refroidissement, la plaque de base 50 et/ ou le feuillard 52 sont réalisé en aluminium.

Le feuillard peut être en une seule partie. Il peut aussi être réalisé en plusieurs parties, par exemple chacune des parties présentant la forme d'un « L » dont un segment est solidarisé sur la plaque de base tandis que l'autre forme ailette de refroidissement. Dans le cadre de cette invention, toute forme de feuillard est envisageable et est non limitée aux exemples ici décrits.

Dans le cadre d'une convection naturelle, la forme et l'orientation des ailettes sera déterminée de sorte à favoriser au mieux cette convection. Il en sera de même dans le cadre d'une convection forcée.

La face supérieure 55 de la plaque de base 50 porte un circuit d'alimentation 21 des sources lumineuses 16. Ce circuit d'alimentation 21 peut être un circuit imprimé aussi appelé PCB (pour Printed Circuit Board en anglais). Le circuit imprimé utilisé peut être par exemple de type FR4 (pour Flame Resistant 4 en anglais) ou bien IMS (pour Insulated Metal Substrate en anglais). Une pâte thermique à très bon coefficient thermique est disposée entre le circuit d'alimentation et la face supérieure 55 de la plaque de base.

Le dissipateur thermique 18 comporte une plaque de base 50 ayant une fonction de radiateur et des ailettes de refroidissement 80 disposées sur la face opposée 54 à celle portant le circuit imprimé et orientées perpendiculairement par rapport à la plaque de base 50.

Les LEDs 16 sont par exemple des LED de puissance, notamment avec une puissance supérieure ou égale à 3W et placées de façon à émettre de la lumière en direction de l'écran 12. L'écran 12 est incliné d'un angle prédéfini, de préférence compris entre 0° et 40° de façon à obtenir une image virtuelle verticale dans le cadre de l'utilisation du dispositif de génération d'image dans un affichage tête haute.

L'optique de mise en forme 20 comprend par exemple un réseau de lentilles 25, permettant la collimation de la lumière provenant des LEDs 16 pour limiter les pertes de puissance lumineuse si une partie de lumière n'est pas dirigée vers l'écran 12. Généralement, le réseau de lentilles comprend une lentille 25 par LED 16, chaque lentille 25 étant disposée au-dessus de chaque LED 16.

Le diffuseur 22 permet l'homogénéisation de la lumière, de façon à éclairer l'écran 12 de façon homogène pour permettre la formation d'une image de bonne qualité, c'est-à-dire de luminosité sensiblement uniforme. De plus, le diffuseur 22 permet de masquer l'intérieur du dispositif de rétro-éclairage.

D'autres éléments optiques peuvent encore être disposés entre le diffuseur 22 et l'écran 12 comme des filtres prismatiques croisés ou des films de polarisation.

Grâce à l'utilisation d'un dissipateur thermique en deux parties selon l'invention, la chaleur produite par les diodes 16 est plus efficacement évacuée de sorte que l'on peut placer l'optique 20 de mise en forme plus près des LED 16. En pratique, la distance d entre la face inférieure 70 de la lentille 25 et la LED 16 peut être réduite à une valeur comprise entre 0,3 et 07mm, typiquement à environ 0,5mm (voir figure 2).

Ceci a aussi pour conséquence que l'on peut réduire la hauteur et la taille du dispositif de rétro-éclairage, ce qui se traduit en un plus faible encombrement d'un afficheur tête haute (HUD) dans son ensemble, notamment à puissance lumineuse égale pour le dispositif de rétro-éclairage 10.

Ce dernier point est très important au niveau de l'espace sous la planche de bord où l'afficheur tête haute sera intégré et où chaque millimètre de gagné est très important. En outre, le rendement optique du dispositif peut être augmenté par le fait de placer l'optique 20 de mise en forme plus près, car on réduit les pertes latérales du cône de faisceau de lumière émis par les LED 16.

Afin que la lumière se propageant des Leds 16 vers l'écran 12 reste dans le dispositif 14 de rétro-éclairage, l'espace contenu entre les des Leds 16 et l'écran 12, est entouré par un boitier 28, généralement appelé boite à lumière notamment dans le domaine automobile. Pour éviter les pertes de puissances lumineuses dans le boitier 28 par absorption de lumière, celui-ci est réalisé dans un matériau réfléchissant à base de polycarbonate (abrégé PC). Pour une réflexion optimale de la lumière, le boitier 28 doit présenter une surface polie très plane.

Selon une variante non représentée, on peut couvrir de plus le circuit imprimé d'un film réfléchissant à l'exception de l'emplacement des Leds 16. Ce film réfléchissant peut être un film réalisé en polycarbonate (PC) possédant un coefficient de réflexion supérieur à 90%, de préférence supérieur ou égal à 98%. D'autres matériaux peuvent être envisagés pour le film réfléchissant, à condition que ceux-ci soient adaptés aux autres contraintes du dispositif 10.

En variante, comme visible sur les figure 3 et 4, la plaque de base 50 du dissipateur thermique 18 comporte par exemple sur sa face 54 des rainures 56 de section transversale courbes, en forme de rigole et les ailettes de refroidissement 80 sont réalisées sous forme d'un feuillard plié, les retours de pli 58 se logeant en étant fixés dans les rainures 56. En variante, ces rainures peuvent être plates pour recevoir un feuillard 52 en forme de créneaux tel que précédemment décrit.

Par rapport à l'aluminium moulé, la conductivité thermique de l'aluminium non moulé est pratiquement le double. Avec ce mode de réalisation, on améliore de façon significative la dissipation thermique à taille équivalente. En variante, cela permet de réduire la taille du dissipateur thermique et donc du dispositif de rétro-éclairage dans son ensemble. Cette meilleure dissipation thermique permet d'avoir une température moindre au niveau de diodes électroluminescentes et augmente aussi la durée de vie de celles-ci.

La partie courbe de rainure permet d'augmenter la surface de contact avec les plis du feuillard et donc aussi une meilleure dissipation thermique.

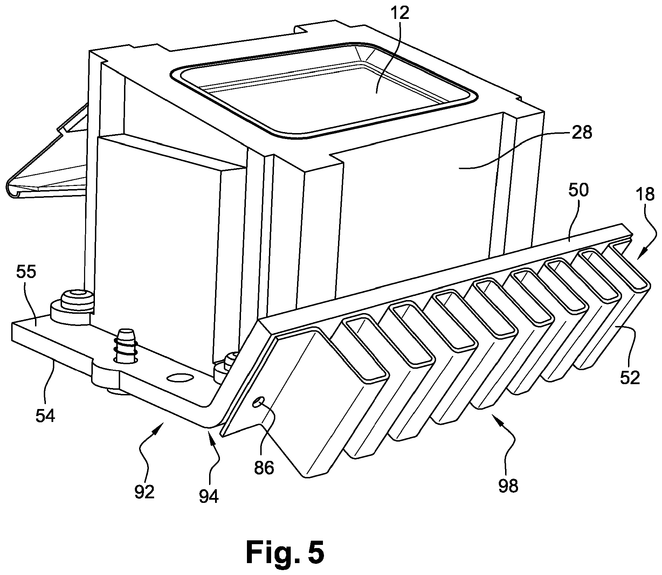

La figure 5 présente une réalisation du dispositif selon l'invention dans laquelle la plaque de base 50 est pliée selon un coude ou pli 94 de sorte que la face inférieure 54 de la plaque de base présente deux plans d'orientations différentes. A titre d'exemple, un premier plan 92 se trouve au droit du boitier 28 qui contient le circuit imprimé 21 et les leds 16 à refroidir. La face inférieure 54 de la plaque de base 50 dans ce cas ne porte pas de feuillard de refroidissement au niveau de ce plan 92. Cette situation peut survenir par exemple lorsqu'aucune place n'est disponible pour placer en cet endroit le feuillard de refroidissement. Une autre raison est que l'on souhaite disposer le feuillard selon une autre orientation qui permettra d'obtenir par exemple une meilleure convection naturelle en orientant les ailettes 80 de sorte que l'air chaud puisse se déplacer facilement vers le haut avec le minimum de contraintes. Ainsi, dans le mode de réalisation de la figure 5, le feuillard est placé sur une face inférieure 54 de la plaque de base 50 orientée selon un plan 98 différent du plan 92 précédemment décrit. Par rapport au boîtier 28 et notamment par rapport à l'emplacement des leds 16, la plaque de base 50 est prolongée de manière à former un porte-à-faux sur lequel est disposé le feuillard, ce porte-à-faux étant ici orienté selon un plan différent de celui portant le boitier 28.

Un trou 86 permet le passage d'une vis pour la fixation du feuillard.

Pour des raisons d'encombrement, la plaque de base 50 peut présenter un simple porte-à-faux, c'est-à-dire sans pli 94 de la plaque de base 50. Dans ce cas, les deux plans précédemment décrits 92 et 98 sont confondus.

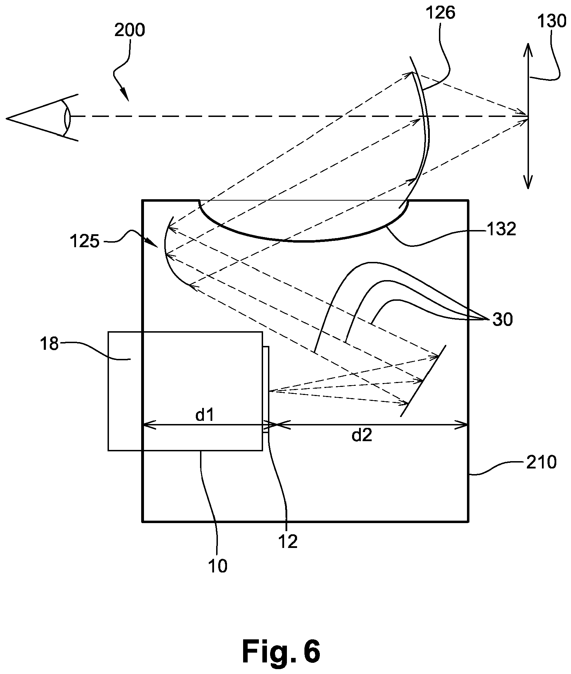

Comme illustré à la figure 6 l'invention concerne aussi un afficheur tête haute 200 comprenant un dispositif 10 de génération d'image selon l'invention.

Le dispositif 10 de génération d'image décrit en référence à la figure 1 forme une image à l'aide de l'écran à cristaux liquides 12.

En aval de l'écran 12 selon le sens de déplacement du faisceau lumineux, ledit afficheur 200 comprend au moins une lame semi-réfléchissante 126 et un dispositif de réflexion 125 interposé sur le trajet de l'image entre l'écran 12 et la lame semi-réfléchissante 126, le dispositif de réflexion 125 comprenant un ou plusieurs miroirs plans ou concaves, comme représenté sur la figure 6. Sur cette figure, le trajet de l'image est symbolisé par trois flèches 30 en pointillé qui se réfléchissent sur le dispositif de réflexion 125 avant de s'afficher à travers la lame semi-réfléchissante 126. Cette dernière permet un grossissement et/ou, par transparence, un affichage de l'image au-delà de la lame semi-réfléchissante, notamment au-delà du pare-brise du véhicule équipé, au niveau d'un écran virtuel 130, obtenu à l'aide de la lame semi-réfléchissante 126.

Cette lame 126 présente un pouvoir de réflexion au moins égal à 20%, ce qui permet à l'utilisateur de voir au travers de la lame la route empruntée par le véhicule, tout en bénéficiant d'un contraste élevé permettant de voir l'image affichée. De manière alternative, l'affichage de l'image peut avoir lieu au niveau du pare-brise du véhicule équipé dudit afficheur 200.

Comme visible sur la figure 6, le dispositif de génération d'image 10 est maintenu dans un boîtier 210 d'afficheur tête haute et le dissipateur thermique 18 du dispositif 10 de rétro-éclairage fait saillie à l'extérieur du boîtier 210 d'afficheur tête haute, ce qui améliore davantage l'évacuation de la chaleur produite par les diodes électroluminescentes 16.

Une trappe transparente 132 de forme concave est ménagée dans le boîtier 210 pour permettre au rayon lumineux réfléchis par le dispositif de réflexion 125 de sortir du boîtier 210.

L'utilisation dissipateur thermique 18 consitué d'une part d'une plaque de base 50 et d'un feuillard 52 permet de mieux évacuer la chaleur de sorte que l'on peut placer les lentilles 25 plus près des LED 16. L'encombrement du générateur d'images se trouve alors réduite. Ainsi un gain de quelques millimètres sur la distance d1 séparant l'écran 12 et le dissipateur thermique 18 peut se traduire par un gain de place de quelques centimètres sur la distance d2 séparant le générateur d'image 10 au fond du boîtier 210 de l'afficheur tête haute 200 (HUD) grâce aux effets d'amplification ou de grossissement des différents miroirs placés dans le boîtier 210 de l'afficheur tête haute 200.

## Revendications

1. Dispositif de rétro-éclairage (14), notamment pour un afficheur tête haute comprenant :
- au moins une diode électroluminescente (16) émettant des faisceaux lumineux,
- une optique (20) de mise en forme des faisceaux lumineux,
- un diffuseur (22) de lumière recevant les faisceaux lumineux mis en forme **caractérisé en ce qu'**il comporte en outre un dissipateur thermique (18) réalisé en au moins deux parties comprenant d'une part, une plaque de base (50) et d'autre part au moins un feuillard (52) fixé sur ladite plaque de base, le feuillard comportant au moins un pli (90) pour former au moins une ailette de refroidissement (80) et au moins une zone (60) destinée à venir en contact thermique avec ladite plaque de base (50), et **en ce que** le feuillard (52) est décalé par rapport à l'emplacement des diodes électroluminescentes (16) et disposé sur un prolongement (98) de la plaque de base (50), le prolongement (98) de la plaque de base (50) présentant une orientation différente de la partie de la plaque de base située au droit des diodes électroluminescentes (16), la plaque de base (50) étant prolongée, par rapport au boîtier (28), de manière à former un porte-à-faux sur lequel est disposé le feuillard.

2. Dispositif selon la revendication 1, **caractérisé en ce que** le feuillard (52) comporte plusieurs plis (90) et plusieurs zones (60) en contact avec la plaque de base (50).

3. Dispositif selon la revendication précédente **caractérisé en ce que** le feuillard présente une forme de créneaux.

4. Dispositif selon l'une quelconque des revendications précédentes **caractérisé en ce qu'**une pâte thermique, est interposée entre la plaque de base (50) et au moins une zone de contact (60).

5. Dispositif selon l'une quelconque des revendications précédentes **caractérisé en ce que** le feuillard est fixé sur la plaque de base (50) par soudage, vissage ou sertissage.

6. Dispositif selon l'une quelconque des revendications précédentes **caractérisé en ce que** le feuillard (52) et/ou la plaque de base (50) sont en aluminium.

7. Dispositif selon l'une quelconque des revendications précédentes, **caractérisé en ce que** le feuillard (52) est disposé sur une face inférieure (54) de la plaque de base (50) opposée à une face supérieure (55) de la plaque de base portant les diodes électroluminescentes (16).

8. Dispositif selon l'une quelconque des revendications précédentes, **caractérisé en ce que** la plaque de base (50) du dissipateur thermique (18) comporte sur sa face opposée à celle portant les diodes électroluminescentes (16) des rainures (56) logeant les ailettes (80).

9. Dispositif selon la revendication précédente, **caractérisé en ce que** les rainures présentent une section transversale courbe ou plate et **en ce que** les zones de contact (60) des ailettes (80) de refroidissement sont réalisées sous forme d'un feuillard plié, les retours de pli se logeant en étant fixés dans des rainures (56) de section transversale courbes ou plates.

10. Dispositif selon la revendication précédente, **caractérisé en ce que** la plaque de base (50) comporte un pli (94) afin que prolongement (98) de la plaque de base (50) puisse présenter une orientation différente de la partie de la plaque ce base située au droit des diodes électroluminescentes (16).

11. Dispositif selon l'une quelconque des revendications 1 à 10, **caractérisé en ce que** l'optique (20) de mise en forme comporte un réseau de lentilles (25), chaque lentille (25) étant placée en face d'une diode électroluminescente (16) et formant collimateur.

12. Dispositif de génération d'image (10), notamment pour afficheur tête haute, comportant un écran à cristaux liquide (12) et un dispositif de rétro-éclairage (14) de cet écran à cristaux liquide (12) selon l'une quelconque des revendications 1 à 11.

13. Afficheur tête haute (200) comprenant un dispositif de génération d'image (10) selon la revendication 12.

14. Afficheur tête haute (200) selon la revendication 13, **caractérisé en ce que** qu'il comporte au moins un miroir de renvoi (125).

15. Afficheur tête haute (200) selon la revendication 13 ou 14, **caractérisé en ce que** le dispositif de génération d'image (10) est maintenu dans un boîtier (210) d'afficheur tête haute et **en ce que** le dissipateur thermique (18) fait saillie à l'extérieur du boîtier (210) d'afficheur tête haute.

## Patentansprüche

1. Rückbeleuchtungsvorrichtung (14), insbesondere für eine Headup-Anzeige, beinhaltend:
- mindestens eine Elektrolumineszenzdiode (16), die Lichtbündel emittiert,
- eine Formungsoptik (20) für die Lichtbündel,
- einen Lichtdiffusor (22), der die in Form gebrachten Lichtbündel empfängt,
**dadurch gekennzeichnet, dass** sie ferner einen Kühlkörper (18) umfasst, der aus mindestens zwei Teilen hergestellt ist, die einerseits eine Basisplatte (50) und andererseits mindestens ein Bandmaterial (52), das an der Basisplatte befestigt ist, beinhalten, wobei das Bandmaterial mindestens einen Falz (90) umfasst, um mindestens eine Kühlrippe (80) und mindestens einen Bereich (60), der dazu bestimmt ist, mit der Basisplatte (50) in thermischen Kontakt zu kommen, zu bilden, und dadurch, dass das Bandmaterial (52) mit Bezug auf die Anordnung der Elektrolumineszenzdioden (16) versetzt ist und auf einer Verlängerung (98) der Basisplatte (50) angeordnet ist, wobei die Verlängerung (98) der Basisplatte (50) eine andere Ausrichtung aufweist als der Teil der Platte, der sich direkt unter den Elektrolumineszenzdioden (16) befindet, wobei die Basisplatte (50) mit Bezug auf das Gehäuse (28) verlängert ist, um einen Überstand zu bilden, an dem das Bandmaterial angeordnet ist.

2. Vorrichtung nach Anspruch 1, **dadurch gekennzeichnet, dass** das Bandmaterial (52) mehrere Falze (90) und mehrere Bereiche (60) in Kontakt mit der Basisplatte (50) umfasst.

3. Vorrichtung nach dem vorhergehenden Anspruch, **dadurch gekennzeichnet, dass** das Bandmaterial zinnenförmig ist.

4. Vorrichtung nach einem beliebigen der vorhergehenden Ansprüche, **dadurch gekennzeichnet, dass** zwischen der Basisplatte (50) und mindestens einem Kontaktbereich (60) eine Wärmeleitpaste eingefügt ist.

5. Vorrichtung nach einem beliebigen der vorhergehenden Ansprüche, **dadurch gekennzeichnet, dass** das Bandmaterial durch Schweißen, Schrauben oder Crimpen an der Basisplatte (50) befestigt ist.

6. Vorrichtung nach einem beliebigen der vorhergehenden Ansprüche, **dadurch gekennzeichnet, dass** das Bandmaterial (52) und/oder die Basisplatte (50) aus Aluminium sind.

7. Vorrichtung nach einem beliebigen der vorhergehenden Ansprüche, **dadurch gekennzeichnet, dass** das Bandmaterial (52) an einer unteren Fläche (54) der Basisplatte (50) gegenüber einer oberen Fläche (55) der Basisplatte, die die Elektrolumineszenzdioden (16) trägt, angeordnet ist.

8. Vorrichtung nach einem beliebigen der vorhergehenden Ansprüche, **dadurch gekennzeichnet, dass** die Basisplatte (50) des Kühlkörpers (18) an ihrer Fläche, die derjenigen, die die Elektrolumineszenzdioden (16) trägt, gegenüberliegt, Nuten (56) umfasst, die die Rippen (80) aufnehmen.

9. Vorrichtung nach dem vorhergehenden Anspruch, **dadurch gekennzeichnet, dass** die Nuten einen gekrümmten oder flachen Querschnitt aufweisen und dass die Kontaktbereiche (60) der Kühlrippen (80) in Form eines gefalzten Bandmaterials hergestellt sind, wobei die Umfalzungen durch Befestigung in Nuten (56) mit gekrümmtem oder flachem Querschnitt aufgenommen sind.

10. Vorrichtung nach dem vorhergehenden Anspruch, **dadurch gekennzeichnet, dass** die Basisplatte (50) einen Falz (94) umfasst, damit die Verlängerung (98) der Basisplatte (50) eine andere Ausrichtung aufweisen kann als der Teil der Basisplatte, der sich direkt unter den Elektrolumineszenzdioden (16) befindet.

11. Vorrichtung nach einem beliebigen der Ansprüche 1 bis 10, **dadurch gekennzeichnet, dass** die Formungsoptik (20) ein Linsenarray (25) umfasst, wobei jede Linse (25) gegenüber einer Elektrolumineszenzdiode (16) eingerichtet ist und einen Kollimator bildet.

12. Bilderzeugungsvorrichtung (10), insbesondere für eine Headup-Anzeige, die einen Flüssigkristallschirm (12) und eine Rückbeleuchtungsvorrichtung (14) für diesen Flüssigkristallschirm (12) nach einem beliebigen der Ansprüche 1 bis 11 umfasst.

13. Headup-Anzeige (200), die eine Bilderzeugungsvorrichtung (10) nach Anspruch 12 beinhaltet.

14. Headup-Anzeige (200) nach Anspruch 13, **dadurch gekennzeichnet, dass** sie mindestens einen Umlenkspiegel (125) umfasst.

15. Headup-Anzeige (200) nach Anspruch 13 oder 14, **dadurch gekennzeichnet, dass** die Bilderzeugungsvorrichtung (10) in einem Gehäuse (210) einer Headup-Anzeige gehalten wird und dass der Kühlkörper (18) an der Außenseite des Gehäuses (210) der Headup-Anzeige vorsteht.

## Claims

1. Backlighting device (14), notably for a head-up display, comprising:
- at least one light-emitting diode (16) which emits light beams,
- an optical system (20) for shaping the light beams, and
- a light diffuser (22) receiving the shaped light beams,
**characterized in that** it further comprises a heat sink (18) made in at least two parts, comprising, on the one hand, a base plate (50), and, on the other hand, at least one strip (52) fastened to said base plate, the strip comprising at least one bend (90) to form at least one cooling fin (80) and at least one area (60) designed to come into thermal contact with said base plate (50), and **in that** the strip (52) is offset relative to the location of the light-emitting diodes (16) and is positioned on an extension (98) of the base plate (50), the extension (98) of the base plate (50) having a different orientation from the part of the base plate placed in line with the light-emitting diodes (16), the base plate (50) being extended, with respect to the housing (28), so as to form a cantilever on which the strip is placed.

2. Device according to Claim 1, **characterized in that** the strip (52) has a plurality of bends (90) and a plurality of areas (60) in contact with the base plate (50) .

3. Device according to the preceding claim, **characterized in that** the strip has a castellated shape.

4. Device according to any of the preceding claims, **characterized in that** a heat-conducting paste is interposed between the base plate (50) and at least one contact area (60).

5. Device according to any of the preceding claims, **characterized in that** the strip is fastened to the base plate (50) by welding, screwing or crimping.

6. Device according to any of the preceding claims, **characterized in that** the strip (52) and/or the base plate (50) are/is made of aluminium.

7. Device according to any of the preceding claims, **characterized in that** the strip (52) is placed on a lower face (54) of the base plate (50), opposite an upper face (55) of the base plate carrying the light-emitting diodes (16) .

8. Device according to any of the preceding claims, **characterized in that** the base plate (50) of the heat sink (18) comprises, on its face opposite the face carrying the light-emitting diodes (16), grooves (56) which house the fins (80).

9. Device according to the preceding claim, **characterized in that** the grooves have a curved or flat cross section, and **in that** the contact areas (60) of the cooling fins (80) are made in the form of a bent strip, the return bends being housed and fastened in grooves (56) having a curved or flat cross section.

10. Device according to the preceding claim, **characterized in that** the base plate (50) comprises a bend (94) such that an extension (98) of the base plate (50) can have a different orientation from the part of the base plate placed in line with the light-emitting diodes (16) .

11. Device according to any of Claims 1 to 10, **characterized in that** the shaping optical system (20) comprises a grid of lenses (25), each lens (25) being placed facing a light-emitting diode (16) and forming a collimator.

12. Image generation device (10), notably for a head-up display, comprising a liquid crystal screen (12) and a backlighting device (14) for this liquid crystal screen (12) according to any of Claims 1 to 11.

13. Head-up display (200) comprising an image generation device (10) according to Claim 12.

14. Head-up display (200) according to Claim 13, **characterized in that** it comprises at least one reflecting mirror (125).

15. Head-up display (200) according to Claim 13 or 14, **characterized in that** the image generation device (10) is held in a head-up display housing (210), and **in that** the heat sink (18) projects outside the head-up display housing (210).
